# EUROPEAN PATENT APPLICATION

(11) **EP 2 662 812 A1**
(43) Date of publication of application: **13.11.2013**
(21) Application number: 13002343.5
(22) Date of filing: 02.05.2013
(51) Int. Cl.: G06Q 10/06

(54) **Enterprise resource planning system performing data analysis**

(30) Priority: 07.05.2012 US 201213465869
(71) Applicant: SAP AG, 69190 Walldorf (DE)
(72) Inventor: Botros, Sherif, 69190 Walldorf (DE); Herman, David, 69190 Walldorf (DE); Shami, Mohammad, 69190 Walldorf (DE)
(74) Representative: Müller-Boré & Partner Patentanwälte

(57) **Abstract**

A company is associated, in an enterprise resource planning system, with a plurality of business entities that each have at least one structured record used by the enterprise resource planning system to characterize the business entity. Thereafter, documents are obtained from a plurality of information sources that characterize events associated with each business entity. It is then determined, using pre-defined business rules, which of the events are pertinent to the company so that enhancement records can be generated for the events determined to be pertinent to the company. These enhancement records characterize the corresponding event and are linked to the structured record for the corresponding business entity. Related apparatus, systems, techniques and articles are also described.

## Description

### TECHNICAL FIELD

The subject matter described herein relates to an enterprise resource planning system in which events affecting various business entities associated with a company are mined / monitored.

### BACKGROUND

Companies continue to directly and indirectly do business with an increasing number of entities such as customers, suppliers, service providers, and other business partners. As these third party relationships expand, it becomes increasingly difficult for companies to identify events such as potential problems with such entities. For example, a company may not be notified of a disruption of a supplier to one of their direct suppliers until receiving notice from the direct supplier. In many cases, this notification may be untimely and result in disruption to the supply chain of the company.

### SUMMARY

In one aspect, a company is associated, in an enterprise resource planning system, with a plurality of business entities that each have at least one structured record used by the enterprise resource planning system to characterize the business entity. Thereafter, documents are obtained from a plurality of information sources that characterize events associated with each business entity. It is then determined, using pre-defined business rules, which of the events are pertinent to the company so that enhancement records can be generated for the events determined to be pertinent to the company. These enhancement records characterize the corresponding event and are linked to the structured record for the corresponding business entity. At least one of the associating, obtaining, determining, and generating can be performed by at least one programmable data processor forming part of at least one computing system.

The monitoring can use names for the business entities as well as generated name variants. Obtaining the documents can include monitoring at least a portion of the plurality of information sources for data characterizing the events. In addition or in the alternative, obtaining the documents can include querying at least a portion of the plurality of information sources for data characterizing the events.

A text analysis filter can classify each document characterizing an event determined to be pertinent to the company into one of a plurality of categories. Each enhancement record can include a link to the document as obtained from the corresponding information source. Each enhancement record can include at least a portion of the corresponding document. A wide variety of information sources can be used, including, without limitation, resources publicly accessible on the Internet such as news articles, web pages, and social media sources. In addition, in some implementations, data characterizing relationships of entities specified in an event with other entities can be stored in the enhancement record.

Articles of manufacture are also described that comprise computer executable instructions permanently stored (e.g., non-transitorily stored, etc.) on computer readable media, which, when executed by a computer, causes the computer to perform operations herein. Similarly, computer systems are also described that may include a processor and a memory coupled to the processor. The memory may temporarily or permanently store one or more programs that cause the processor to perform one or more of the operations described herein. In addition, methods can be implemented by one or more data processors either within a single computing system or distributed among two or more computing systems.

The subject matter described herein provides many advantages. For example, the current subject matter allows companies to be better informed about events occurring that affect or have the potential to affect their various business partners. Such events may be identified from a variety of disparate data sources.

The details of one or more variations of the subject matter described herein are set forth in the accompanying drawings and the description below. Other features and advantages of the subject matter described herein will be apparent from the description and drawings, and from the claims.

### DESCRIPTION OF DRAWINGS

FIG. 1 is a process flow diagram illustrating the generation of enhancement records for business entities associated with a company;

FIG. 2 is a system diagram illustrating an enterprise resource planning system coupled to a plurality of information sources and clients; and

FIG. 3 illustrates a sample enhancement record.

### DETAILED DESCRIPTION

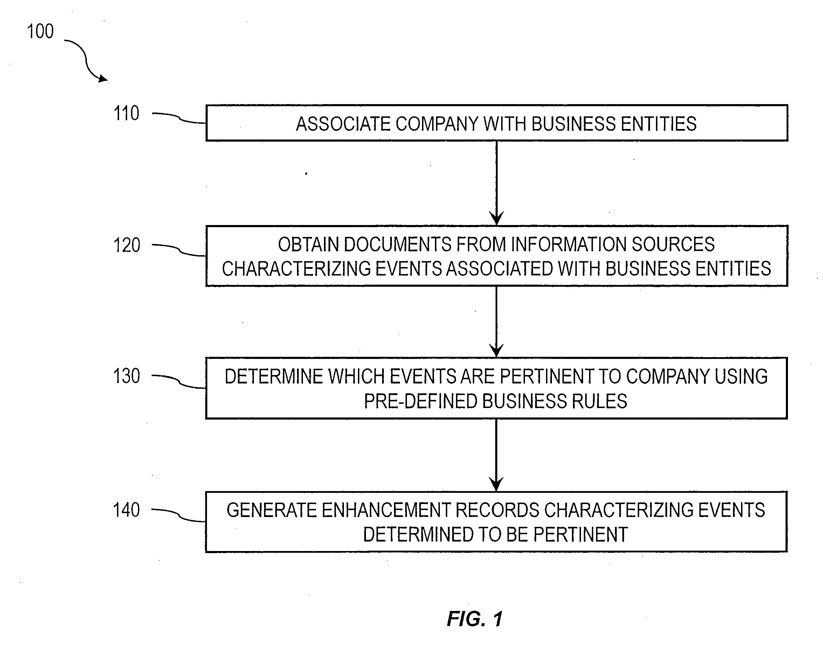

FIG. 1 is a process flow diagram 100 illustrating a method, in which at 110, a company is associated with a plurality of business entities in an enterprise resource planning system. Each of the business entities have at least one structured record that is used / consumed by the enterprise resource planning system to characterize the business entity. Thereafter, at 120, documents are obtained from a plurality of information sources that characterize events associated with each business entity. Pre-defined business rules are then used, at 130, to determine which of the events are pertinent to the company. Based on such determination, at 140, enhancement records are generated for the events determined to be pertinent to the company. The enhancement records characterize the corresponding event and can be linked or otherwise appended to the structured record for the corresponding business entity. As used herein, unless otherwise explicitly stated, the term "company" should be construed to comprise: business names, place names, product names and/or person names.

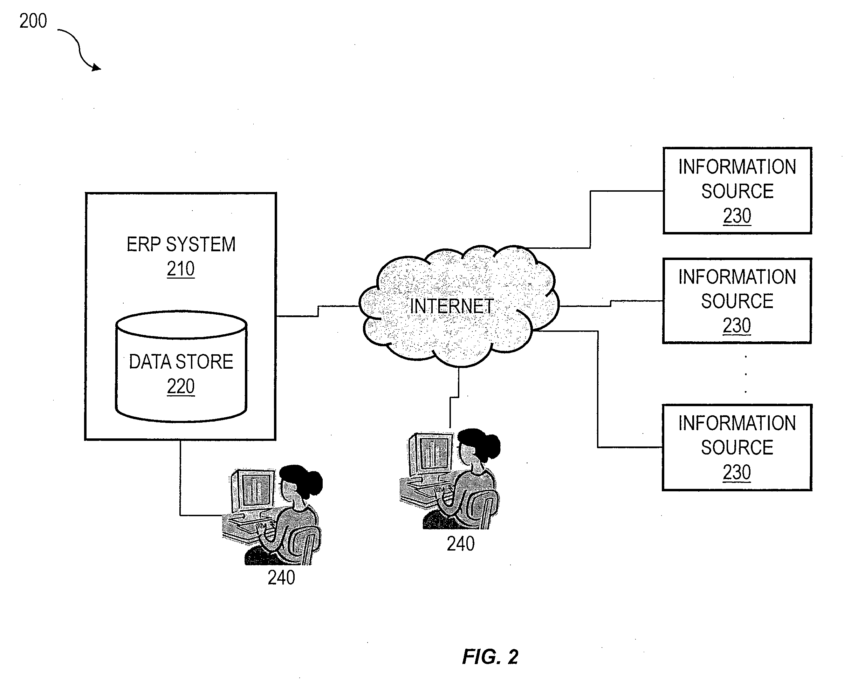

FIG. 2 is a system diagram 200 for implementing the current subject matter including an ERP system 210 coupled to a plurality of information sources 230 via a communications network such as the Internet. The ERP system 210 can include one or more data stores 220 and/or the ERP system 210 can be coupled to one or more remote data stores 220. The ERP system 210 can be accessed by one or more clients 240 directly (e.g., via a LAN, etc.) or remotely via a communications network such as the Internet.

The ERP system 210 can associate a particular company with a plurality of business entities. For example, this association can link the company with all of its direct suppliers and direct customers. In some cases, indirect suppliers (e.g., suppliers of suppliers, etc.) and/or indirect customers (e.g., the ultimate purchaser, etc.) can be associated with the company.

The ERP system 210 can actively monitor / query the information sources 230 to determine whether the names of any of the associated business entities appear in documents within such information sources (referred to herein as "events"). Temporal time span limitations can be utilized such that only recent (e.g., last five days, etc.) of events are monitored. Data characterizing some or all of the monitored events can be stored by the EPR system 210 in the data store 220 (as further described below). The ERP system 210 can obtain the event data via monitoring newsfeeds (e.g., RSS feeds, etc., third-party news aggregators, web crawling of company web sites, etc .. )and/or by periodically querying (e.g., once per day, etc.) one or more of the information source 240 using the business entity names or variants thereof. The ERP system 210 can obtain some (e.g., a snippet) or all of the documents referencing the business entities as well as their particular location (e.g., URL, etc.) on the respective information source 240 and store the documents or data charactering them in the data store 220.

Variants of the business names for the entities can be monitored as information sources 230 may not always use the full legal name for the entities (e.g., Advanced Enterprise Incorporated), but rather, may use truncated versions (e.g., Advanced Enterprises, Advanced Enterprises Inc.) or versions with additional or missing punctuation (e.g., Advanced Enterprises, Incorporated). One example of entity name generation methodologies that can be used for the creation of such variants can be found in co-pending application Ser. No. 13/465,848 entitled: "Entity Name Variant Generator", filed on May 7, 2012. These variants can identify documents that may potentially contain content to trigger an alert (as described in further detail below).

The term document as used herein includes (unless explicitly stated otherwise) web site pages, online news articles, and social media interactions (e.g., messaging, TWITTER feeds, message boards, etc.). The documents obtained from the information sources 230 can, in some cases, be analyzed to identify those portions of the documents pertaining to a main topic of interest (and as a result identifying the remaining portions as not being pertinent). For example, with web pages, there can be large amounts of text that is displayed with an article that is not related to the article such as website navigation menus, advertisements, disclaimers, and the like. Moreover, HTML web pages can also include underlying code which is used by the browser to properly render the web page. All of this text need not be analyzed as it could result in a false alert. One example of text filtering can be found in co-pending application Ser. No. 13/465,833 entitled: "Document Text Processing Using Edge Detection", filed on May 7, 2012 (the contents of which are hereby fully incorporated by reference). In some cases, the resulting text (after the text analysis) can be saved or otherwise form part of a cleaned file. These cleaned files can be stored, for example, in the data store 220 of the ERP system 210.

The documents obtained from the information sources 230 and/or the cleaned files are analyzed, using a rules engine, to determine if their content should trigger an alert and how to characterize a particular alert and the interrelationship of any entities referenced in the alert (e.g., company A was acquired by company B, etc.). These rules can be part of a pre-defined package of rules (that are customized based on the business entity name) or they can be user-defined. For example, a pre-defined rule might be a combination of terms such as **company name** and "declares bankruptcy" as such a business event would almost certainly be of interest to the company. A user-defined rule might be a combination of terms such as **company name** "expands" "China".

The rule engine that can implement the rule set includes, for example, Business Objects ThingFinder™. Business Objects ThingFinder™ analyzes text and automatically identifies and extracts more than 35 key entity types out of the box, including people, dates, places, companies or other things from any text data source. This entity extraction capability combines knowledge about sequences of word tags with intelligence about word semantics. More importantly, Thingfinder™ enables one to define and extract of activities, events and relationships between entities using a specialized entity definition language. One can generate an event when a Thingfinder™ rule that combines one of the business entities A (or any of its generated equivalent name variants ) with one event type E fires. One can further qualify the extraction by testing whether the body of text in which the rule fires matches a number of qualification rules.

One qualification rule can be that the text should mention the business entity A or any of its variants at least 2 times in the last three paragraphs preceding the extraction. A second qualification rule can be that the topic of the encompassing text should be categorized as belonging to a set number of acceptable topics such as business or economy or politics. A third qualification rule can exclude events found in proximity to either a number of user defined disqualification words or entity types.

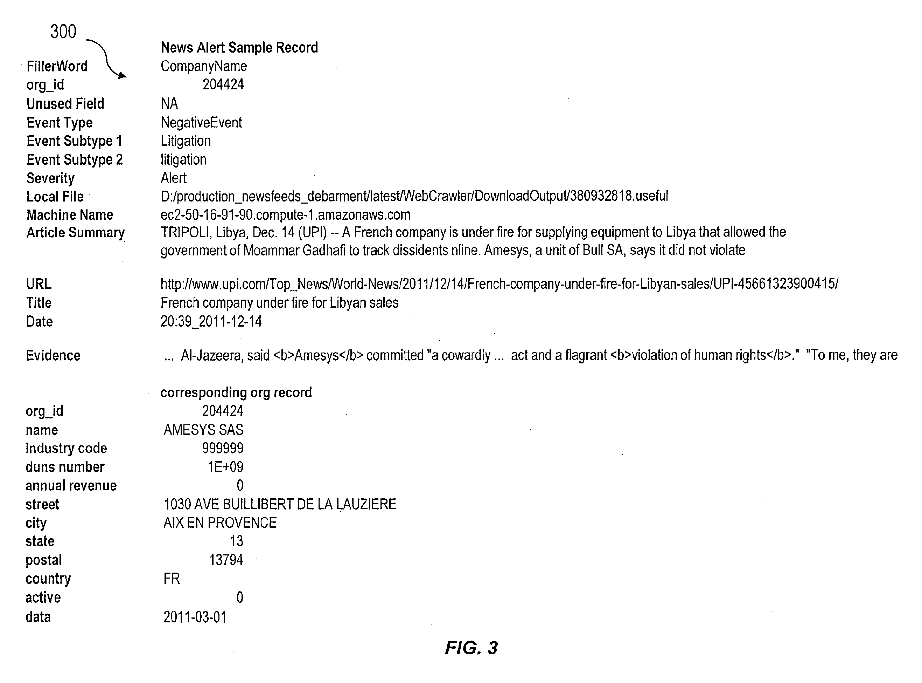

FIG. 3 is a sample enhancement record 300 including a plurality of fields characterizing an event associated with one of the business entities that was determined as being pertinent to the company. The enhancement record 300 can include fields identifying the company, characterizing the type of event (e.g., event category, etc.), identifies a location of a document (e.g., web page, etc.) describing the event, a snippet of the document, as well as information mapping the enhancement record 300 to a structured record previously generated for the business entity. The enhancement record 300 can additionally extract relationships between business entities. For example, a relationship can be represented as a database fact record that has two foreign keys each representing a business entity. This fact record can also specify the type of relationship between these two entities (e.g., Oracle [org_id =123] -> acquired [Acquisition] -> Taleo [org_id = 678], etc.). The enhancement record 300 can be a separate record or it can be appended to the corresponding business entity record(s) in the data store 220 of the ERP system 210. The enhancement record 300 data can be viewed seamlessly by the clients 240 in a similar manner to how non-alert data is presented to users in ERP systems.

With the record 300, the FillerWord identifies the company name. The org_id field refers to an identification assigned to the company name by the ERP system 210. The Unused Field is a blank field which can be used when additional fields are required. The Event Type field refers to a high level categorization of the event and the Event Subtype 1 and Event Subtype 2 fields refer to categorization sub-sets, the severity field. The Severity field refers to a relative assessment of the importance of the alert (with a default value being alert). The Local File fields provides a value (e.g., a URL used to access a file in the data store 220, etc.) indicating where the document referenced in the alert can be located. The Machine Name field provides identifies the particular information source 240 from which the document with the alert was obtained. The Article Summary field provides a snippet of the document. The URL field provides a link to the website that displayed the document. The Title field includes the title of the document. The Date field includes the date the document was generated and/or obtained. The Evidence field identifies those portions of the document that were used to generate the alert and/or the parts of the document used by the corresponding business rules. The second org_id field refers to the identifier of the business entity associated with the company as used by the ERP system 210. The other fields name, industry code, duns number, annual revenue, street, city, state, postal, country, active, and data all provide corresponding values for the associated business entity. It will be appreciated that the foregoing fields are provided as an illustration and are not intended to be exhaustive of the possible fields / combination of fields that can be included with an enhancement record.

Various implementations of the subject matter described herein may be realized in digital electronic circuitry, integrated circuitry, specially designed ASICs (application specific integrated circuits), computer hardware, firmware, software, and/or combinations thereof. These various implementations may include implementation in one or more computer programs that are executable and/or interpretable on a programmable system including at least one programmable processor, which may be special or general purpose, coupled to receive data and instructions from, and to transmit data and instructions to, a storage system, at least one input device, and at least one output device.

These computer programs (also known as programs, software, software applications or code) include machine instructions for a programmable processor, and may be implemented in a high-level procedural and/or object-oriented programming language, and/or in assembly/machine language. As used herein, the term "machine-readable medium" refers to any computer program product, apparatus and/or device (e.g., magnetic discs, optical disks, memory, Programmable Logic Devices (PLDs)) used to provide machine instructions and/or data to a programmable processor, including a machine-readable medium that receives machine instructions as a machine-readable signal. The term "machine-readable signal" refers to any signal used to provide machine instructions and/or data to a programmable processor.

To provide for interaction with a user, the subject matter described herein may be implemented on a computer having a display device (e.g., a CRT (cathode ray tube) or LCD (liquid crystal display) monitor) for displaying information to the user and a keyboard and a pointing device (e.g., a mouse or a trackball) by which the user may provide input to the computer. Other kinds of devices may be used to provide for interaction with a user as well; for example, feedback provided to the user may be any form of sensory feedback (e.g., visual feedback, auditory feedback, or tactile feedback); and input from the user may be received in any form, including acoustic, speech, or tactile input.

The subject matter described herein may be implemented in a computing system that includes a back-end component (e.g., as a data server), or that includes a middleware component (e.g., an application server), or that includes a front-end component (e.g., a client computer having a graphical user interface or a Web browser through which a user may interact with an implementation of the subject matter described herein), or any combination of such back-end, middleware, or front-end components. The components of the system may be interconnected by any form or medium of digital data communication (e.g., a communication network). Examples of communication networks include a local area network ("LAN"), a wide area network ("WAN"), and the Internet.

The computing system may include clients and servers. A client and server are generally remote from each other and typically interact through a communication network. The relationship of client and server arises by virtue of computer programs running on the respective computers and having a client-server relationship to each other.

Although a few variations have been described in detail above, other modifications are possible. For example, the logic flow depicted in the accompanying figures and/or described herein do not require the particular order shown, or sequential order, to achieve desirable results. Other embodiments may be within the scope of the following claims.

## Claims

1. A computer-implemented method comprising:
associating, in an enterprise resource planning system, a company with a plurality of business entities, each of the business entities having at least one structured record used by the enterprise resource planning system to characterize the business entity;
obtaining documents from a plurality of information sources characterizing events associated with each business entity;
determining, using pre-defined business rules, which of the events are pertinent to the company; and
generating enhancement records for the events determined to be pertinent to the company, the enhancement records characterizing the corresponding event and being linked to the structured record for the corresponding business entity.

2. A method as in claim 1, wherein at least one of the associating, obtaining, determining, and generating is performed by at least one programmable data processor forming part of at least one computing system.

3. A method as in claim 1 or 2, wherein the monitoring uses names for the business entities as well as generated name variants.

4. A method as in any one of the preceding claims, wherein obtaining the documents comprises monitoring at least a portion of the plurality of information sources for data characterizing the events.

5. A method as in any one of the preceding claims, wherein obtaining the documents comprises querying at least a portion of the plurality of information sources for data characterizing the events.

6. A method as in any one of the preceding claims, further comprising:
classifying, using a text analysis filter, each document characterizing an event determined to be pertinent to the company into one of a plurality of categories.

7. A method as in claim 6, wherein each enhancement record comprises a link to the document as obtained from the corresponding information source.

8. A method as in claim 7, wherein each enhancement record comprises at least a portion of the corresponding document.

9. A method as in any one of the preceding claims, wherein the information sources comprise resources publicly accessible on the Internet selected from a group consisting of: news articles, web pages, and social media sources.

10. A method as in any one of the preceding claims, further comprising:
characterizing relationships of entities specified in an event with other entities;
storing the characterized relationships in the corresponding enhancement records.

11. An article comprising non-transitory computer readable media storing instructions which when executed by one or more data processors result in operations according to any one of the preceding claims.

12. A system comprising:
at least one data processor;
memory storing instructions which when executed by the at least one data processor results in operations comprising:
associating, in an enterprise resource planning system, a company with a plurality of business entities, each of the business entities having at least one structured record used by the enterprise resource planning system to characterize the business entity;
obtaining documents from a plurality of information sources characterizing events associated with each business entity;
determining, using pre-defined business rules, which of the events are pertinent to the company; and
generating enhancement records for the events determined to be pertinent to the company, the enhancement records characterizing the corresponding event and being linked to the structured record for the corresponding business entity.
